# EUROPÄISCHE PATENTSCHRIFT

(11) **EP 3 132 163 B1**
(45) Veröffentlichungstag und Bekanntmachung des Hinweises auf die Patenterteilung: **30.01.2019**
(21) Anmeldenummer: 15704527.9
(22) Anmeldetag: 12.02.2015
(51) Int. Cl.: F16J 15/32, F16J 15/34, F16J 15/36

(54) **GLEITRINGDICHTUNGSANORDNUNG MIT BALGELEMENT**
SLIP-RING SEAL ARRANGEMENT WITH BELLOWS ELEMENT
DISPOSITIF D'ÉTANCHÉITÉ À ANNEAU GLISSANT COMPORTANT UN SOUFFLET

(30) Priorität: 15.04.2014 DE 102014207188
(43) Veröffentlichungstag der Anmeldung: 22.02.2017
(73) Patentinhaber: EagleBurgmann Germany GmbH & Co. KG, 82515 Wolfratshausen (DE)
(72) Erfinder: ZIEGENBEIN, Dieter, 82538 Geretsried (DE); RIES, Wolfgang, 82433 Bad Kohlgrub (DE); SCHICKTANZ, Rudolf, 82538 Geretsried (DE); THELKE, Jörg, 82515 Wolfratshausen (DE); WOPPOWA, Robert, 82515 Wolfratshausen (DE); EILETZ, Andreas, 82515 Wolfratshausen (DE); HASELBACHER, Peter, 81479 München (DE); BRUSTMANN, Elisabeth, 82515 Wolfratshausen (DE)
(74) Vertreter: Hoefer & Partner Patentanwälte mbB
(86) Internationale Anmeldenummer: PCT/EP2015/052973
(87) Internationale Veröffentlichungsnummer: WO 2015/158442

(56) Entgegenhaltungen:
- EP-A2- 0 157 097
- WO-A1-2007/124950
- DE-A1-102008 057 168
- GB-A- 1 342 410
- US-A- 3 391 942

## Beschreibung

Die vorliegende Erfindung betrifft eine Gleitringdichtungsanordnung mit einem Balgelement, welche ein verbessertes axiales Nachsetzverhalten im Betrieb aufweist.

Gleitringdichtungsanordnungen mit Balgelementen sind aus dem Stand der Technik in unterschiedlichen Ausgestaltungen bekannt. Das Balgelement kann grundsätzlich ein Elastomerbalg oder ein Metallbalg sein, welche insbesondere ein axiales Nachsetzen der Gleitringdichtung, z.B. bei Wellenauslenkungen, ermöglicht. Es wurde festgestellt, dass sich insbesondere bei Verwendung eines Elastomerbalgs ein verschlechtertes Nachsetzverhalten der Gleitringdichtungsanordnung ergeben kann. Gründe hierfür sind einerseits, dass eine Stützschulter des Balgelements sich aufgrund der Weichheit des Elastomermaterials auf einer Wellenoberfläche oder dergleichen festsetzen kann und somit einem axialen Nachsetzen nicht schnell genug folgen kann. Dies tritt umso mehr auf, wenn beispielsweise Verschmutzungen auf der Wellenoberfläche vorhanden sind, welche im Betrieb durch Ablagerungen auf der Welle hervorgerufen werden können. Dies kann nach einem längeren Betreiben der Gleitringdichtungsanordnung bis zu einem vollständigen Blockieren der axialen Beweglichkeit des Balgelements führen. Es wurde weiterhin festgestellt, dass in Verbindung mit im Betrieb auftretenden Schwingungen die Stützschulter des Elastomerbalgs auch ohne Verschmutzungen aufgrund der erhöhten Reibung zwischen dem Elastomermaterial und der Welle zu einer Behinderung des Nachsetzverhaltens führen kann. Diese vorhergehend beschriebenen Probleme können hierbei im Betrieb zu einer erhöhten Leckage am Dichtspalt bis hin zu einem Ausfall der Gleitringdichtungsanordnung führen. Ferner ist aus der WO 2007/124950 A1 eine Gleitringdichtungsanordnung gemäß dem Oberbegriff des Anspruchs 1 bekannt.

Es ist daher Aufgabe der vorliegenden Erfindung, eine Gleitringdichtungsanordnung mit einem elastomeren Balgelement bereitzustellen, welche bei einfachem Aufbau und einfacher, kostengünstiger Herstellbarkeit über die gesamte Lebensdauer ein verbessertes Nachsetzverhalten und eine Selbstreinigungsfunktion aufweist, um insbesondere eine Gefahr eines Hängenbleibens oder Verkantens des Balgelements während eines Nachsetzvorgangs zu vermeiden.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung mit den Merkmalen des Anspruchs 1 hat den Vorteil, dass eine axiale Beweglichkeit eines rotierenden Elastomer-Balgelements signifikant verbessert wird. Hierdurch kann ein deutlich verbessertes axiales Nachsetzverhalten der Gleitringdichtungsanordnung erreicht werden, was im Betrieb zu deutlich reduzierten Leckageraten, insbesondere bei Anfahrvorgängen der Gleitringdichtungsanordnung, führt. Dies wird erfindungsgemäß dadurch erreicht, dass die Gleitringdichtungsanordnung eine Balgeinheit mit einem Balgelement und einer separaten, ringförmigen Zwischenscheibe aufweist. Das Balgelement umfasst einen ersten Anschlussbereich für eine Verbindung mit einem rotierenden Bauteil, wie z.B. einer rotierenden Welle, einen zweiten Anschlussbereich für eine Verbindung mit einem rotierenden Gleitring und einen flexiblen Balgzwischenbereich, welcher zwischen dem ersten und zweiten Anschlussbereich angeordnet ist. Dabei ist das Balgelement vollständig aus einem Elastomermaterial hergestellt. Die Zwischenscheibe ist aus einem steiferen Material als das Elastomermaterial hergestellt, insbesondere aus einem Kunststoff. Die ringförmige Zwischenscheibe ist dabei derart am Balgelement angeordnet, dass eine erste Seite der Zwischenscheibe am rotierenden Gleitring, insbesondere an einer Rückseite des rotierenden Gleitrings, anliegt und eine zweite Seite der Zwischenscheibe am Balgelement, insbesondere an einem Absatz des Balgelements am zweiten Anschlussbereich, anliegt. Ein innerer Umfangsbereich der Zwischenscheibe liegt dabei zur Abstützung auf dem rotierenden Bauteil auf und ermöglicht so eine verbesserte, reibungsarme Axialbewegung für das notwendige Nachsetzverhalten der Balgeinheit. Ferner weist die Zwischenscheibe an einem Innenumfang eine Vielzahl von Ausnehmungen auf. Dadurch wird eine Zwischenscheibe mit profiliertem Innenumfang erhalten, wodurch eine Auflagefläche der Zwischenscheibe auf dem rotierenden Bauteil reduziert wird. Dadurch kann eine Reibung der Zwischenscheibe auf dem rotierenden Bauteil weiter reduziert werden und ein noch besseres Nachsetzverhalten erreicht werden.

Die Ausnehmungen sind dabei vorzugsweise regelmäßig am Innenumfang der Zwischenscheibe vorgesehen. Ferner weisen die Ausnehmungen bevorzugt eine bogenförmige geometrische Form oder eine im Wesentlichen rechteckige geometrische Form auf. Eine Breite der Zwischenscheibe ist vorzugsweise konstant. Alternativ ist eine Breite der Zwischenscheibe an einem inneren Umfangsbereich unterschiedlich zu einer Breite an einem äußeren Umfangsbereich. Besonders bevorzugt ist die Breite am inneren Umfangsbereich dabei größer als die Breite am äußeren Umfangsbereich, wodurch eine besonders stabile Abstützung der Zwischenscheibe auf einem rotierenden Bauteil erreicht wird.

Gemäß einer weiteren bevorzugten Ausgestaltung der vorliegenden Erfindung umfasst die Balgeinheit ferner einen ersten Z-Profilwinkel und einen zweiten Z-Profilwinkel. Der erste Z-Profilwinkel ist dabei an einer Außenseite des ersten Anschlussbereichs angeordnet und der zweite Z-Profilwinkel ist an einer Außenseite des zweiten Anschlussbereichs angeordnet. Die beiden Z-Profilwinkel sind dabei ringförmig ausgebildet und weisen einen Z-förmigen Querschnitt mit einem radial nach außen gerichteten Bereich, einem axialen Bereich und einem radial nach innen gerichteten Bereich auf. Die Z-Profilwinkel sind vorzugsweise aus einem metallischen Werkstoff hergestellt und versteifen zusätzlich die ersten und zweiten Anschlussbereiche des elastomeren Balgelements.

Besonders bevorzugt ist der zweite Z-Profilwinkel, welcher am zweiten Anschlussbereich angeordnet ist, derart angeordnet, dass in Axialrichtung der Gleitringdichtungsanordnung der zweite Z-Profilwinkel auf gleicher Höhe wie der zweite Anschlussbereich abschließt. Hierdurch wird eine vollständige Versteifung des zweiten Anschlussbereichs erreicht, so dass insbesondere eine Einspannlänge, mit welcher der zweite Anschlussbereich des Balgelements den rotierenden Gleitring einspannt, reduziert werden kann. Dies führt zu einer Reduzierung der Axiallänge der Balgeinheit und damit zu einer gewünschten Reduzierung der gesamten Axiallänge der Gleitringdichtungsanordnung.

Gemäß einer weiteren bevorzugten Ausgestaltung der Erfindung umfasst die Balgeinheit ferner ein Federelement, welches das Balgelement in Axialrichtung vorspannt. Das Federelement ist vorzugsweise eine Tonnenfeder. Besonders bevorzugt stützt sich das Federelement dabei mit einem ersten Endbereich am ersten Z-Profilwinkel ab und mit einem zweiten Endbereich am zweiten Z-Profilwinkel ab.

Für eine sichere Fixierung der Zwischenscheibe am Balgelement weist das Balgelement vorzugsweise eine Nut auf, in welcher die Zwischenscheibe angeordnet ist. Dadurch wird eine einfache Montage und sichere Fixierung der Zwischenscheibe am Balgelement erreicht.

Gemäß einer weiteren bevorzugten Ausgestaltung der Erfindung weist die Zwischenscheibe wenigstens einen, von der Zwischenscheibe nach außen vorstehenden Bereich für eine Verdrehsicherung auf. Die vorstehenden Bereiche stehen vorzugsweise in Axialrichtung von beiden Seiten der Zwischenscheibe vor. Die vorstehenden Bereiche zur Verdrehsicherung ermöglichen weiter eine Reduzierung einer radialen Verpressung des rotierenden Gleitrings, da durch die vorstehenden Bereiche schon eine gewisse Sicherung des rotierenden Gleitrings an der Balgeinheit über die Zwischenscheibe möglich ist.

Vorzugsweise erfolgt eine Drehmomenteinbringung eines Drehmoments des rotierenden Bauteils auf den rotierenden Gleitring ausschließlich über die Balgeinheit. Hierdurch kann eine besonders kompakte Ausführung bereitgestellt werden.

Weiter bevorzugt übergreift ein radial nach innen gerichteter Wandbereich des ersten Z-Profilwinkels ein zum Balgzwischenbereich gerichtetes Ende des ersten Anschlussbereichs. Bevorzugt übergreift auch ein radial nach innen gerichteter Wandbereich des zweiten Z-Profilwinkels ein zum Balgzwischenbereich gerichtetes Ende des zweiten Anschlussbereichs. Hierdurch kann eine verbesserte Steifigkeit des elastomeren Balgelements und insbesondre seiner beiden Anschlußbereiche erreicht werden.

Vorzugsweise weist das Balgelement eine Antihaft-Beschichtung auf.

Nachfolgend werden bevorzugte Ausführungsbeispiele der Erfindung unter Bezugnahme auf die begleitend Zeichnung im Detail beschrieben. Gleiche bzw. funktional gleiche Teile sind dabei mit den gleichen Bezugszeichen bezeichnet. In der Zeichnung ist:
- Fig. 1: eine schematische Längsschnittansicht einer Gleitringdichtungsanordnung gemäß einem ersten Ausführungsbeispiel der Erfindung,
- Fig. 2: eine vergrösserte Detaildarstellung von Fig. 1,
- Fig. 3: eine schematische Querschnittsansicht der Gleitringdichtungsanordnung von Fig. 1,
- Fig. 4: eine schematische Querschnittsansicht einer Gleitringdichtungsanordnung gemäß einem zweiten Ausführungsbeispiel der Erfindung
- Fig. 5: eine schematische Seitenansicht einer Zwischenscheibe von Figur 4,
- Fig. 6 und 7: schematische Ansichten eines zweiten Ausführungsbeispiels einer Zwischenscheibe
- Fig. 8 und 9: schematische Ansichten einer Gleitringdichtungsanordnung gemäß einem dritten Ausführungsbeispiel und
- Fig. 10: schematische Ansichten einer Gleitringdichtungsanordnung gemäß einem vierten Ausführungsbeispiel.

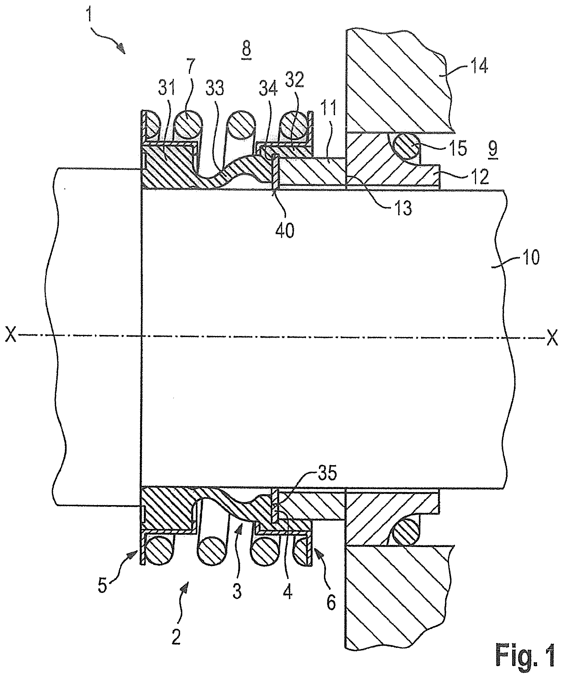

Nachfolgend wird unter Bezugnahme auf die Fig. 1 bis 3 eine Gleitringdichtungsanordnung 1 gemäß einem ersten Ausführungsbeispiel der Erfindung im Detail beschrieben.

Wie aus Fig. 1 ersichtlich ist, umfasst die Gleitringdichtungsanordnung 1 einen rotierenden Gleitring 11 und einen stationären Gleitring 12, weiche in bekannter Weise zwischen sich einen Dichtspalt 13 definieren. Die Gleitringdichtungsanordnung 1 dient zur Abdichtung eines ersten Raumes 8 von einem zweiten Raum 9.

Der rotierende Gleitring 11 ist mit einem rotierenden Bauteil 10, welches in diesem Ausführungsbeispiel eine Welle ist, verbunden und dreht sich gemeinsam mit dieser. Der stationäre Gleitring 12 ist mit einem ortsfesten Gehäuse 14 verbunden. Das Bezugszeichen 15 bezeichnet ein Nebendichtelement zur Abdichtung des stationären Gleitrings 12 gegenüber dem Gehäuse 14.

Die Gleitringdichtungsanordnung 1 umfasst ferner eine Balgeinheit 2, welche die Verbindung zwischen dem rotierenden Gleitring 11 und dem rotierenden Bauteil 10 herstellt. Die Balgeinheit 2 umfasst ein Balgelement 3 und eine einteilige Zwischenscheibe 4. Das Balgelement 3 ist aus einem Elastomermaterial hergestellt und umfasst einen ersten Anschlussbereich 31, einen zweiten Anschlussbereich 32 und einen zwischen beiden Anschlussbereichen 31, 32 liegenden Balgzwischenbereich 33. Der Balgzwischenbereich 33 ist flexibel und ermöglicht eine Verlängerung und Verkürzung des Balgelements 3 in Axialrichtung X-X.

Wie aus Fig. 1 ersichtlich ist, ist das Balgelement 3 ein einteiliges Bauteil und dient zur Abdichtung am rotierenden Gleitring 11. Weiterhin übernimmt die Balgeinheit 2 eine Drehmomentübertragung vom rotierenden Bauteil 10 auf den rotierenden Gleitring 11.

Die Balgeinheit 2 umfasst ferner einen ersten Z-Profilwinkel 5 und einen zweiten Z-Profilwinkel 6. Der erste Z-Profilwinkei 5 ist am ersten Anschlussbereich 31 an dessen Außendurchmesser angeordnet. Der zweite Z-Profiiwinkel 6 ist am zweiten Anschlussbereich 32 an dessen Außendurchmesser angeordnet. Die beiden Z-Profilwinkel 5, 6 weisen im Schnitt ein Z-Profil auf.

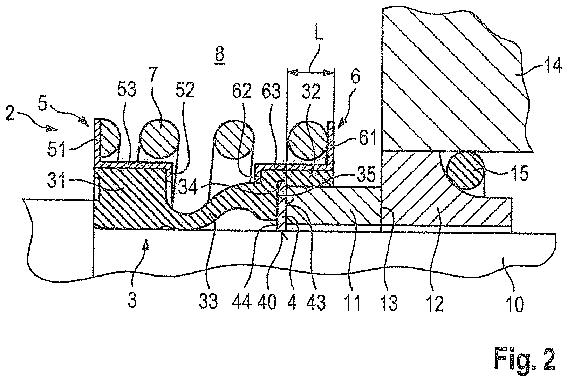

Der erste Z-Profilwinkel 5 umfasst einen ersten radial nach außen gerichteten Bereich 51, einen ersten radial nach innen gerichteten Bereich 52 und einen ersten Axialbereich 53. Der zweite Z-Profilwinkel 6 umfasst einen zweiten radial nach außen gerichteten Bereich 61, einen zweiten radial nach innen gerichteten Bereich 62 und einen zweiten Axialbereich 63 (vergleiche Fig. 2). Der erste radial nach innen gerichtete Bereich 52 des ersten Z-Profilwinkels übergreift dabei ein zum Balgzwischenbereich 33 gerichtetes Ende des ersten Anschlussbereichs 31. Der zweite radial nach innen gerichtete Bereich 62 des zweiten Z-Profilwinkels 6 übergreift ein zum Balgzwischenbereich 33 gerichtetes Ende des zweiten Anschlussbereichs 32 (vergleiche Fig. 1). Die beiden Axialbereiche 53, 63 der beiden Z-Profilwinkel 5, 6 liegen dabei auf den Außendurchmessern des ersten und zweiten Anschlussbereichs 31, 32 auf. Hierdurch werden die elastomeren Anschlussbereiche 31, 32 verpresst.

Ferner liegen ein Ende des zweiten Anschlussbereichs 32 und der zweite radial nach außen gerichtete Bereich 61 des zweiten Z-Profilwinkels 6 in Axialrichtung X-X auf gleicher Höhe, so dass sich ein ebener Abschluss ergibt.

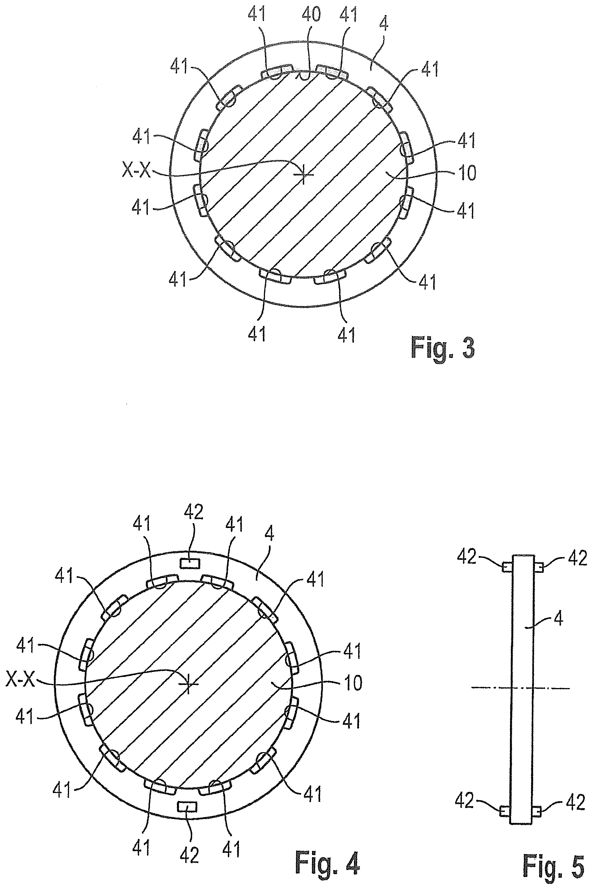

Das Balgelement 3 umfasst ferner an seinem Innenumfang eine Nut 34. Wie aus Fig. 2 ersichtlich ist, ist die Zwischenscheibe 4 dabei in der Nut 34 angeordnet. Ein innerer Umfangsbereich 40 der Zwischenscheibe stützt sich auf dem Außenumfang des rotierenden Bauteils 10 ab. Am inneren Umfangsbereich 40 sind ferner eine Vielzahl von Ausnehmungen 41 gebildet (vgl. Figur 3). Dadurch wird eine Auflagefläche des inneren Umfangsbereichs 40 auf den Außenumfang des rotierenden Bauteils 10 reduziert. Die Ausnehmungen 41 sind in regelmäßigen Abständen entlang des Umfangs der Zwischenscheibe 4 gebildet und weisen eine im Wesentlichen rechteckige geometrische Form auf. Es sind jedoch auch andere geometrische Formen der Ausnehmung 41 möglich, z. B. bogenförmige Ausnehmungen.

Wie aus Fig. 1 ersichtlich ist, ist die ringförmige Zwischenscheibe 4 dabei zwischen dem rotierenden Gleitring 11 und dem Balgelement 3 derart angeordnet, dass die Zwischenscheibe 4 mit einer ersten Seite 43 an einer rückwärtigen Seite des rotierenden Gleitrings 11 anliegt und mit einer zweiten Seite 44 an einem Absatz 35 des Balgelements 3 anliegt. Die Zwischenscheibe 4 weist ferner eine konstante Breite auf.

Die Balgeinheit 2 umfasst ferner ein Vorspannelement 7, welches in diesem Ausführungsbeispiel eine Tonnenfeder ist. Das Vorspannelement 7 stützt sich dabei zwischen dem ersten Z-Profilwinkel 5 und dem zweiten Z-Profilwinkel 6 ab und stellt eine permanente Vorspannung der Balgeinheit 2 bereit.

Durch das erfindungsgemäße Vorsehen der steifen Zwischenscheibe 4 zwischen dem elastomeren Balgelement 3 und dem rotierenden Gleitring 11 kann erfindungsgemäß nun ein verbessertes axiales Nachsetzverhalten der Gleitringdichtungsanordnung 1 ermöglicht werden. Im Betrieb von Gleitringdichtungen ist es immer möglich, dass sich Ablagerungen auf dem Außenumfang des rotierenden Bauteils 10 bilden. Die erfindungsgemäße Verwendung der Zwischenscheibe 4 ermöglicht es nun, dass das Balgelement 3 im Bereich des zweiten Anschlussbereichs 32 nicht mehr mit dem Außenumfang des rotierenden Bauteils 10 in Kontakt steht. Die Zwischenscheibe 4, welche beispielsweise aus einem stabilen Kunststoffmaterial hergestellt sein kann, kann sich dagegen ohne Anhaftungserscheinungen auf dem Außenumfang des rotierenden Bauteils 10 bewegen und auch Verschmutzungen von der Oberfläche des rotierenden Bauteils entfernen. Somit kann der bisher im Stand der Technik vorhandene Nachteil bei elastomeren Balgelementen hinsichtlich ihres Nachsetzverhaltens nach gewisser Laufzeit durch das geschickte Vorsehen der Zwischenscheibe 4 überwunden werden. Die Zwischenscheibe 4 weist auch einen niedrigeren Reibungskoeffizienten als das Balgelement 3 auf und ermöglicht einen Selbstreinigungseffekt der Oberfläche des rotierenden Bauteils 10 bei Axialbewegungen. Ferner kann erfindungsgemäße eine Leckage am Dichtspalt 13 signifikant reduziert werden, da ein Nachsetzen der Gleitringdichtung immer möglich ist und die Dichtspaltbreite möglichst klein gehalten werden kann.

Die Zwischenscheibe 4 hat ferner noch den Vorteil einer möglichen deutlichen Verkürzung der Gleitringdichtungsanordnung in Axialrichtung X-X, da auf eine im Stand der Technik bei elastomeren Balgelementen bisher notwendige Stützschulter, welche im Bereich des zweiten Anschlussbereichs 32 vorgesehen war und das Balgelement 3 auf dem rotierenden Bauteil 10 abstützt, verzichtet werden kann. Hierdurch ergibt sich eine Einsparung von Axialbauraum. Gleichzeitig ergibt sich durch die Verwendung der Zwischenscheibe 4 auch die Möglichkeit, den rotierenden Gleitring 11 in Axialrichtung X-X durch einen längeren Axialbereich 63 des zweiten Z-Profilwinkels 6 über eine längere Axialrichtung einzuspannen (Einspannlänge L) und somit eine radiale Verpressung des rotierenden Gleitrings 11 zu reduzieren (vgl. Figur 2). Hierdurch ergeben sich positive Auswirkungen auf den rotierenden Gleitring 11 insbesondere hinsichtlich einer möglichen, unerwünschten Verformung der Gleitfläche des rotierenden Gleitrings 11. Diese Verformung kann im Betrieb zu zusätzlicher, unerwünschter Leckage an der Gleitringdichtung führen.

Die erfindungsgemäße Balgeinheit 2 ermöglicht somit eine Reihe von überraschenden Vorteilen bei der Verwendung von elastomeren Balgelementen 3. Dabei kann die Balgeinheit 2 in Axialrichtung X-X noch kompakter aufgebaut werden. Durch die Möglichkeit der Verkürzung der Dichtungsbaulänge in Axialrichtung X-X ergibt sich somit ein extrem großer Wettbewerbsvorteil. Weiterhin kann die erfindungsgemäße Balgeinheit 2 auch die gegebenenfalls im Betrieb auftretenden Schwingungen problemlos dämpfen und durch ständig mögliche axiale Nachsetzbewegungen auch nach langer Laufzeit noch ausführen.

Die Fig. 4 und 5 zeigen eine Gleitringdichtungsanordnung gemäß einem zweiten Ausführungsbeispiel, bei der die Zwischenscheibe 4 zusätzlich noch in Axialrichtung X-X vorstehende Bereiche 42 aufweist. Diese vorstehenden Bereiche 42 sind eine Verdrehsicherung, welche sicherstellen, dass sich die Zwischenscheibe 4 nicht in Umfangsrichtung gegenüber dem Balgelement 3 einerseits und dem rotierenden Gleitring 11 andererseits dreht. Die Verwendung der vorstehenden Bereiche 42 als Verdrehsicherung reduziert weiterhin zusätzlich die radiale Verpressung des rotierenden Gleitrings 11, da eine Drehmomentübertragung von der Balgeinheit 2 auf den rotierenden Gleitring 11 auch über die zum rotierenden Gleitring 11 gerichteten, vorstehenden Bereiche 42 ermöglicht werden. Im rotierenden Gleitring 42 und im Balgelement 3 können entsprechend geformte Ausnehmungen zur Aufnahme der vorstehenden Bereiche 42 vorgesehen sein. Ansonsten entspricht dieses Ausführungsbeispiel dem vorhergehenden Ausführungsbeispiel, so dass auf die dort gegebene Beschreibung verwiesen werden kann.

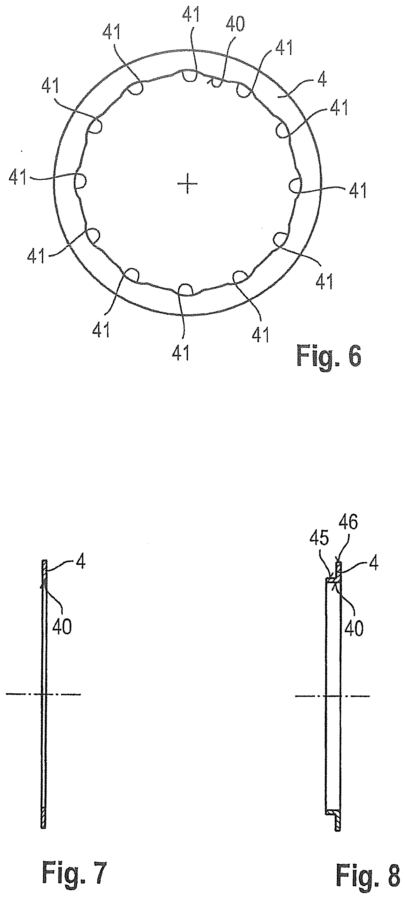

Die Figuren 6 und 7 zeigen eine alternative Zwischenscheibe 4 für eine Gleitringdichtungsanordnung gemäß einem zweiten Ausführungsbeispiel, bei der die Ausnehmungen 41 am inneren Umfangsbereich 40 der Zwischenscheibe bogenförmig ausgebildet sind. Die bogenförmigen Ausnehmungen 41 können dabei einfach, z. B. mit eines Fräsers, hergestellt werden. Die Ausnehmung 41 sind entlang des Innenumfangs 40 in gleichen Abständen angeordnet. Die Zwischenscheibe 4 weist dabei eine konstante Breite auf (siehe Fig. 7).

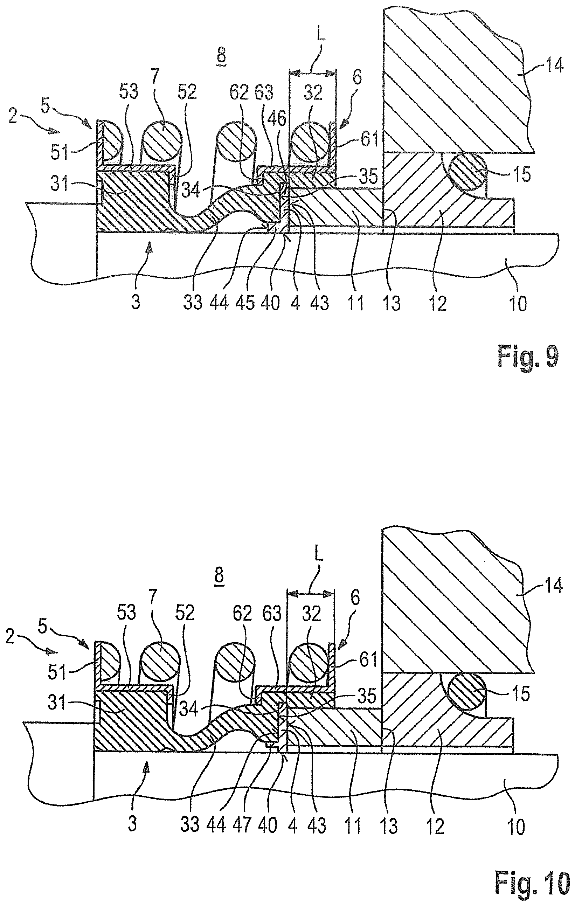

Die Figuren 8 und 9 zeigen eine Gleitringdichtungsanordnung gemäß einem dritten Ausführungsbeispiel mit einer weiteren alternativen Zwischenscheibe 4, bei der ein Absatz 45 vorgesehen ist. Die Zwischenscheibe 4 weist somit im Schnitt eine gespiegelte L-Form auf. Dadurch ergeben sich unterschiedliche Breiten der Zwischenscheibe 4 am inneren Umfangsbereich 40 sowie an einem äußeren Umfangsbereich 46. Der Absatz 45 ermöglicht dabei eine stabile Abstützung der Zwischenscheibe 4 auf dem rotierenden Bauteil. Der schmalere äußere Umfangsbereich 46 ermöglicht eine einfache Fixierung der Zwischenscheibe 4 im elastomeren Balgelement. Dabei muss im Balgelement 3 insbesondere keine breite Nut vorgesehen werden, sondern es kann eine kleine Nut zur teilweisen Aufnahme des schmalen, äußeren Umfangsbereichs 46 vorgesehen werden, sodass das Balgelement durch die Nut nicht übermäßig geschwächt wird. Am inneren Umfangsbereich 40 sind bevorzugt ebenfalls bogenförmige Ausnehmungen 41 vorgesehen.

Figur 10 zeigt eine Gleitringdichtungsanordnung gemäß einem vierten Ausführungsbeispiels der Erfindung. Die Zwischenscheibe 4 weist einen Abstützbereich 47 auf, welcher das Balgelement abstützt. Der Abstützbereich 47 berührt dabei nicht das rotierende Bauteil 10. Die Zwischenscheibe 4 stützt sich nur mit dem schmalen, inneren Umfangsbereich 40 auf dem rotierenden Bauteil ab.

### Bezugszeichenliste

- 1: Gleitringdichtungsanordnung
- 2: Balgeinheit
- 3: Balgelement
- 4: Zwischenscheibe
- 5: Erster Z-Profilwinkel
- 6: Zweiter Z-Profilwinkel
- 7: Vorspannelement
- 8: Erster Raum
- 9: Zweiter Raum
- 10: Rotierendes Bauteil/Welle
- 11: Rotierender Gleitring
- 12: Stationärer Gleitring
- 13: Dichtspalt
- 14: Gehäuse
- 15: Nebendichtelement/O-Ring
- 31: Erster Anschlussbereich
- 32: Zweiter Anschlussbereich
- 33: Balgzwischenbereich
- 34: Nut
- 35: Absatz
- 40: Innerer Umfangsbereich
- 41: Ausnehmung
- 42: Vorstehende Bereiche
- 43: erste Seite
- 44: zweite Seite
- 45: Absatz
- 46: Äußerer Umfangsbereich
- 47: Abstützbereich
- 51: Erster radial nach außen gerichteter Bereich
- 52: Erster radial nach innen gerichteter Bereich
- 53: Erster Axialbereich
- 61: Zweiter radial nach außen gerichteter Bereich
- 62: Zweiter radial nach innen gerichteter Bereich
- 63: Zweiter Axialbereich
- L: axiale Einspannlänge
- X-X: Axialrichtung

## Patentansprüche

1. Gleitringdichtungsanordnung, umfassend
- einen rotierenden Gleitring (11) und einen stationären Gleitring (12), welche zwischen sich einen Dichtspalt (13) definieren, und
- eine Balgeinheit (2) mit einem Balgelement (3) und einer Zwischenscheibe (4),
- wobei das Balgelement (3) einen ersten Anschlussbereich (31), einen zweiten Anschlussbereich (32) und einen Balgzwischenbereich (33) aufweist,
- wobei das Balgelement (3) aus einem Elastomermaterial hergestellt ist und eine Verbindung zwischen dem rotierenden Gleitring (11) und einem rotierenden Bauteil (10) bereitstellt,
- wobei die Zwischenscheibe (4) zwischen dem Balgelement (3) und dem rotierenden Gleitring (11) angeordnet ist und
- wobei ein innerer Umfangsbereich (40) der Zwischenscheibe (4) zur Abstützung auf dem rotierenden Bauteil (10) angeordnet ist,
**dadurch gekennzeichnet, dass**
- am inneren Umfangsbereich (40) der Zwischenscheibe (4) eine Vielzahl von Ausnehmungen (41) vorgesehen ist.

2. Gleitringdichtungsanordnung nach Anspruch 1, **dadurch gekennzeichnet, dass** die Ausnehmungen (41) in regelmäßigen Abständen am inneren Umfangsbereich (40) der Zwischenscheibe (4) angeordnet sind.

3. Gleitringdichtungsanordnung nach einem der Ansprüche 1 oder 2, **dadurch gekennzeichnet, dass** die Ausnehmungen (41) bogenförmig oder im wesentlichen rechteckig sind.

4. Gleitringdichtungsanordnung nach einem der vorhergehenden Ansprüche, wobei die Balgeinheit (2) ferner einen ersten Z-Profilwinkel (5) und einen zweiten Z-Profilwinkel (6) umfasst, wobei der erste Z-Profilwinkel (5) an einer Außenseite des ersten Anschlussbereichs (31) angeordnet ist und wobei der zweite Z-Profilwinkel (6) an einer Außenseite des zweiten Anschlussbereichs (32) angeordnet ist.

5. Gleitringdichtungsanordnung nach Anspruch 4, **dadurch gekennzeichnet, dass** der zweite Z-Profilwinkel (6) in Axialrichtung (X-X) auf gleicher Höhe wie der zweite Anschlussbereich (32) endet.

6. Gleitringdichtungsanordnung nach einem der vorhergehenden Ansprüche, ferner umfassend ein Vorspannelement (7), welches die Balgeinheit (2) in Axialrichtung (X-X) vorspannt.

7. Gleitringdichtungsanordnung nach Anspruch 6, **dadurch gekennzeichnet, dass** das Vorspannelement (7) sich mit einem ersten Endbereich am ersten Z-Profilwinkel (5) und mit einem zweiten Endbereich am zweiten Z-Profilwinkel (6) abstützt.

8. Gleitringdichtungsanordnung nach einem der vorhergehenden Ansprüche, **dadurch gekennzeichnet, dass** das Balgelement (2) an einem inneren Umfang eine Nut (34) zur Aufnahme der Zwischenscheibe (4) aufweist.

9. Gleitringdichtungsanordnung nach einem der vorhergehenden Ansprüche, **dadurch gekennzeichnet, dass** die Zwischenscheibe (4) wenigstens einen von der Zwischenscheibe (4) vorstehenden Bereich (42) für eine Verdrehsicherung der Zwischenscheibe (4) aufweist.

10. Gleitringdichtungsanordnung nach einem der vorhergehenden Ansprüche, **dadurch gekennzeichnet, dass** eine Drehmomenteinbringung eines Drehmoments des rotierenden Bauteils (10) ausschließlich über die Balgeinheit (2) auf den rotierenden Gleitring (11) erfolgt.

11. Gleitringdichtungsanordnung nach einem der Ansprüche 4 oder 5, **dadurch gekennzeichnet, dass** ein erster radial nach innen gerichteter Bereich (52) des ersten Z-Profilwinkels (5) ein zum Balgzwischenbereich (33) gerichtetes Ende des ersten Anschlussbereichs (31) übergreift und/oder dass ein zweiter radial nach innen gerichteter Bereich (62) des zweiten Z-Profilwinkels (6) ein zum Balgzwischenbereich (33) gerichtetes Ende des zweiten Anschlussbereichs (32) übergreift.

12. Gleitringdichtungsanordnung nach einem der vorhergehenden Ansprüche, **dadurch gekennzeichnet,**
- **dass** das elastomere Balgelement (3) eine Antihaft-Beschichtung aufweist, oder
- **dass** die Zwischenscheibe aus einem Kunststoff hergestellt ist.

## Claims

1. Mechanical seal arrangement, comprising
- a rotating slide ring (11) and a stationary slide ring (12) which define a sealing gap (13) therebetween, and
- a bellows unit (2) with a bellows element (3) and an intermediate disk (4),
- wherein the bellows element (3) has a first connection region (31), a second connection region (32) and a bellows intermediate region (33),
- wherein the bellows element (3) is produced from an elastomer material and provides a connection between the rotating slide ring (11) and a rotating component (10),
- wherein the intermediate disk (4) is arranged between the bellows element (3) and the rotating slide ring (11), and
- wherein an inner peripheral region (40) of the intermediate disk (4) is arranged for support on the rotating component (10)
**characterised in that** a multiplicity of recesses (41) are provided on the inner peripheral region (40) of the intermediate disk (4).

2. Mechanical seal arrangement as claimed in claim 1, **characterised in that** the recesses (41) are arranged at regular intervals on the inner peripheral region (40) of the intermediate disk (4).

3. Mechanical seal arrangement as claimed in any one of claims 1 or 2, **characterised in that** the recesses (41) are arcuate or substantially rectangular.

4. Mechanical seal arrangement as claimed in any one of the preceding claims, wherein the bellows unit (2) further comprises a first Z-profile bracket (5) and a second Z-profile bracket (6), wherein the first Z-profile bracket (5) is arranged on an outer side of the first connection region (31) and wherein the second Z-profile bracket (6) is arranged on an outer side of the second connection region (32).

5. Mechanical seal arrangement as claimed in claim 4, **characterised in that** the second Z-profile bracket (6) ends in the axial direction (X-X) at the same height as the second connection region (32).

6. Mechanical seal arrangement as claimed in any one of the preceding claims, further comprising a pretensioning element (7) which pretensions the bellows unit (2) in the axial direction (X-X).

7. Mechanical seal arrangement as claimed in claim 6, **characterised in that** the pretensioning element (7) is supported with a first end region on the first Z-profile bracket (5) and is supported with a second end region on the second Z-profile bracket (6).

8. Mechanical seal arrangement as claimed in any one of the preceding claims, **characterised in that** the bellows element (2) has on an inner periphery a groove (34) for receiving the intermediate disk (4).

9. Mechanical seal arrangement as claimed in any one of the preceding claims, **characterised in that** the intermediate disk (4) has at least one region (42), which protrudes from the intermediate disk (4), for locking the intermediate disk (4) against rotation.

10. Mechanical seal arrangement as claimed in any one of the preceding claims, **characterised in that** a torque of the rotating component (10) is introduced exclusively via the bellows unit (2) to the rotating slide ring (11).

11. Mechanical seal arrangement as claimed in any one of claims 4 or 5, **characterised in that** a first radially inwardly directed region (52) of the first Z-profile bracket (5) engages over an end of the first connection region (31) directed to the bellows intermediate region (33) and/or **in that** a second radially inwardly directed region (62) of the second Z-profile bracket (6) engages over an end of the second connection region (32) directed to the bellows intermediate region (33).

12. Mechanical seal arrangement as claimed in any one of the preceding claims, **characterised in that**,
- the elastomeric bellows element (3) has a non-stick coating or
- the intermediate disk is produced from a synthetic material.

## Revendications

1. Dispositif d'étanchéité à anneau glissant, comprenant
- un anneau glissant rotatif (11) et un anneau glissant stationnaire (12), lesquels définissent entre eux une fente d'étanchéité (13), et
- une unité soufflet (2) avec un soufflet (3) et un disque intermédiaire (4),
- dans lequel le soufflet (3) présente une première zone de raccordement (31), une deuxième zone de raccordement (32) et une zone intermédiaire de soufflet (33),
- dans lequel le soufflet (3) est fabriqué en un matériau élastomère et fournit une liaison entre l'anneau glissant rotatif (11) et un composant rotatif (10),
- dans lequel le disque intermédiaire (4) est agencé entre le soufflet (3) et l'anneau glissant rotatif (11) et
- dans lequel une zone périphérique intérieure (40) du disque intermédiaire (4) est agencée pour s'appuyer sur le composant rotatif (10), **caractérisé en ce que**
- une pluralité d'évidements (41) sont prévus au niveau de la zone périphérique intérieure (40) du disque intermédiaire (4).

2. Dispositif d'étanchéité à anneau glissant selon la revendication 1, **caractérisé en ce que** les évidements (41) sont agencés à des distances régulières au niveau de la zone périphérique intérieure (40) du disque intermédiaire (4).

3. Dispositif d'étanchéité à anneau glissant selon l'une quelconque des revendications 1 ou 2, **caractérisé en ce que** les évidements (41) sont en forme d'arc ou sensiblement rectangulaires.

4. Dispositif d'étanchéité à anneau glissant selon l'une quelconque des revendications précédentes, **caractérisé en ce que** l'unité soufflet (2) comprend en outre un premier angle de profil en Z (5) et un deuxième angle de profil en Z (6), dans lequel le premier angle de profil en Z (5) est agencé au niveau d'un côté extérieur de la première zone de raccordement (31) et dans lequel le deuxième angle de profil en Z (6) est agencé au niveau d'un côté extérieur de la deuxième zone de raccordement (32).

5. Dispositif d'étanchéité à anneau glissant selon la revendication 4, **caractérisé en ce que** le deuxième angle de profil en Z (6) se termine dans la direction axiale (X-X) à la même hauteur que la deuxième zone de raccordement (32).

6. Dispositif d'étanchéité à anneau glissant selon l'une quelconque des revendications précédentes, comprenant en outre un élément de précontrainte (7), lequel précontraint l'unité soufflet (2) dans la direction axiale (X-X).

7. Dispositif d'étanchéité à anneau glissant selon la revendication 6, **caractérisé en ce que** l'élément de précontrainte (7) s'appuie avec une première zone d'extrémité sur le premier angle de profil en Z (5) et avec une deuxième zone d'extrémité sur le deuxième angle de profil en Z (6).

8. Dispositif d'étanchéité à anneau glissant selon l'une quelconque des revendications précédentes, **caractérisé en ce que** le soufflet (2) présente, au niveau d'une périphérie intérieure, une rainure (34) pour le logement du disque intermédiaire (4).

9. Dispositif d'étanchéité à anneau glissant selon l'une quelconque des revendications précédentes, **caractérisé en ce que** le disque intermédiaire (4) présente au moins une zone (42) faisant saillie du disque intermédiaire (4) pour une sécurité anti-rotation du disque intermédiaire (4).

10. Dispositif d'étanchéité à anneau glissant selon l'une quelconque des revendications précédentes, **caractérisé en ce qu'**une introduction de couple d'un couple du composant rotatif (10) a lieu exclusivement via l'unité soufflet (2) sur l'anneau glissant rotatif (11).

11. Dispositif d'étanchéité à anneau glissant selon l'une quelconque des revendications 4 ou 5, **caractérisé en ce qu'**une première zone dirigée radialement vers l'intérieur (52) du premier angle de profil en Z (5) vient en prise sur une extrémité dirigée vers la zone intermédiaire de soufflet (33) de la première zone de raccordement (31) et/ou qu'une deuxième zone dirigée radialement vers l'intérieur (62) du deuxième angle de profil en Z (6) vient en prise sur une extrémité dirigée vers la zone intermédiaire de soufflet (33) de la deuxième zone de raccordement (32).

12. Dispositif d'étanchéité à anneau glissant selon l'une quelconque des revendications précédentes, **caractérisé en ce**
- **que** le soufflet élastomère (3) présente un revêtement antiadhésif, ou
- **que** le disque intermédiaire est fabriqué en un plastique.
